# EUROPÄISCHE PATENTSCHRIFT

(11) **EP 2 054 629 B1**
(45) Veröffentlichungstag und Bekanntmachung des Hinweises auf die Patenterteilung: **09.12.2009**
(21) Anmeldenummer: 07819965.0
(22) Anmeldetag: 24.08.2007
(51) Int. Cl.: F04D 29/10, F04D 29/12, F16J 15/44

(54) **WELLENABDICHTUNG**
SHAFT SEAL
SYSTÈME D'ÉTANCHÉITÉ D'ARBRE

(30) Priorität: 24.08.2006 EP 06405361; 10.11.2006 EP 06023405
(43) Veröffentlichungstag der Anmeldung: 06.05.2009
(73) Patentinhaber: ABB Turbo Systems AG, 5400 Baden (CH)
(72) Erfinder: DI PIETRO, Marco, CH-4665 Oftringen (CH); SCHÖNBÄCHLER, Fabian, CH-8037 Zürich (CH); NEUENSCHWANDER, Peter, CH-8006 Zürich (CH); KIES, Matthias, CH-5443 Niederrohrdorf (CH); AMMANN, Bruno, CH-5000 Aarau (CH)
(74) Vertreter: ABB Patent Attorneys
(86) Internationale Anmeldenummer: PCT/EP2007/058825
(87) Internationale Veröffentlichungsnummer: WO 2008/023061

(56) Entgegenhaltungen:
- DE-C1- 3 247 980
- JP-A- 2003 293 783
- US-A- 2 907 595
- US-A- 4 205 857

## Beschreibung

### Technisches Gebiet

Die Erfindung bezieht sich auf das Gebiet der Abgasturbolader für aufgeladene Brennkraftmaschinen.

### Stand der Technik

Abgasturbolader werden zur Leistungssteigerung von Brennkraftmaschinen, insbesondere Hubkolbenmotoren, eingesetzt. Dabei besitzt ein Abgasturbolader üblicherweise einen Radialverdichter und eine Radial- oder Axialturbine. Zwischen der Turbine und dem Verdichter befindet sich das Lagergehäuse mit der Lagerung für die Welle.

Die Abdichtung des Lagerraums zum Verdichterrad-Rückraum erfolgt bei herkömmlichen Abgasturboladern in der Regel durch eine berührungsfreie Wellendichtung. Die Dichtung hat zur Aufgabe, einerseits das aus den Lagern spritzende Schmieröl am Austritt in den Verdichterradrückraum zu hindern und andererseits den Luftmassenstrom vom Verdichterradrückraum in den Ölraum, den sogenannten ,Blow-by' zu minimieren.

Die Ölabdichtung wird dadurch erschwert, dass beim Starten des Motors der Verdichter aufgrund der niedrigen Drehzahl nicht genügend Luft fördert, so dass im Verdichterkanal kurzzeitig ein leichter Unterdruck gegenüber dem Lagerraum entstehen kann. Bei höheren Drehzahlen hingegen herrscht im Verdichterradrückraum ein Überdruck gegenüber dem Ölraum.

In Fig. 1 (Schemaskizze eines ABB TPL Turboladers) und Fig. 2 (JP 2003-293783) sind zwei aus dem Stand der Technik bekannte Dichtungsvarianten abgebildet. In beiden Fällen wird das von rechts anspritzende Öl durch eine mitrotierende Dichtscheibe von der Dichtpartie abgeschirmt. Auf der linken Seite der Scheibe wird durch die Dichtscheibe und das angrenzende, feststehende Bauteil ein schmaler Spalt ausgebildet, welcher das Öl durch Drosselung sowie - bei Rotation - durch Rückförderung am Einströmen in den inneren Dichtungsbereich hindert. Die Abdichtung des Ölraums gegen Blow-by wird in beiden Fällen mit Labyrinthen realisiert.

Die Druckschrift JP 2003-293783, die als nächstliegender Stand der Technik angesehen wird, offenbart die Merkmale des Oberbegriffs des Anspruchs 1.

### Kurze Darstellung der Erfindung

Die Aufgabe der Erfindung besteht darin, die Abdichtung des Lagerraums von Turboladern zum Verdichter-Rückraum zu verbessern.

Dies erfolgt erfindungsgemäss dadurch, dass die Dichtung um eine Fangkammer im Lagergehäuse erweitert wird, welche der rotierenden Spritzscheibe vorgeschaltet ist. Die Fangkammer besteht aus einer Nut im stehenden Teil, welche im unteren Bereich einen Ablauf besitzt. Die Fangkammer führt einen grossen Teil des Ölstroms ab und reduziert so die Ölmenge, welche auf die Spritzscheibe und den restlichen Teil der Dichtung auftrifft, wodurch die Dichtheit verbessert wird.

Anschliessend an die Fangkammer umfasst die Dichtung eine Art Labyrinth, welches beispielsweise durch mindestens eine hervorstehende Nase geformt ist und welches das Öl am Entlangströmen der Dichtscheibe hindert.

Schliesslich verfügt das Dichtsystem über eine Fangrinne im stehenden Gehäuseteil, über welche abgespritztes Öl abgeführt wird, so dass es nicht ein weiteres Mal auf die rotierende Welle auftrifft.

Optional weist die Welle, oder ein auf der Welle aufgesetztes Bauteil, eine radial innenliegende Ölabscheiderille auf, von welcher das Öl radial nach aussen abspritzt und anschliessend in der Fangkammer im stehenden Gehäuseteil durch das Lagergehäuse abfliesst.

Optional wird das Labyrinth zur Abdichtung gegen Blow-by durch die Dichtscheibe und die Zwischenwand gebildet. Dadurch wird der Wärmeeintrag in das Verdichterrad verringert, und die Dichtung ist wegen der günstigeren Materialpaarung streiftoleranter.

### Kurze Beschreibung der Zeichnungen

Im folgenden ist anhand der Figuren die erfindungsgemässe Vorrichtung schematisch dargestellt und näher erläutert.

In allen Figuren sind gleichwirkende Elemente mit gleichen Bezugszeichen versehen:
- Fig. 1: zeigt ein Schnittbild einer Abdichtung des Lagerraums von Turboladern zum Verdichter-Rückraum gemäss dem Stand der Technik,
- Fig. 2: zeigt ein Schnittbild einer Abdichtung des Lagerraums von Turbotadern zum Verdichter-Rückraum gemäss dem Stand der Technik.
- Fig. 3: zeigt ein Schnittbild einer erfindungsgemäss ausgebildeten Abdichtung des Lagerraums von Turboladern zum Verdichter-Rückraum mit einer Fangkammer.

### Weg zur Ausführung der Erfindung

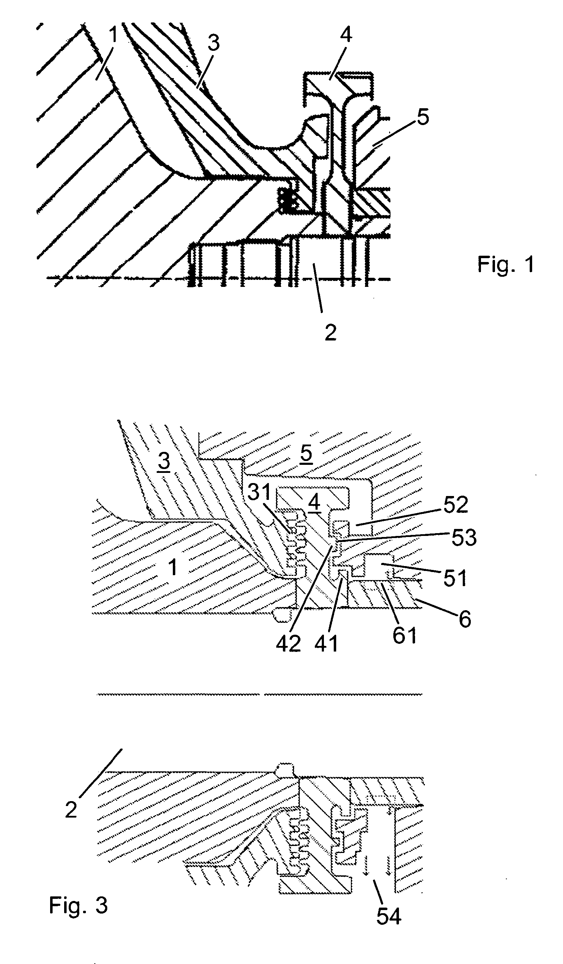

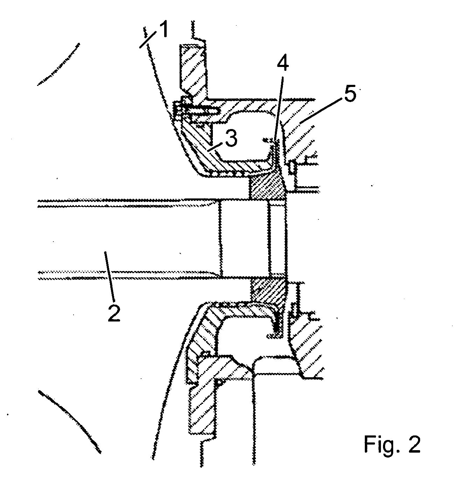

Wie Eingangs erwähnt, zeigen Fig. 1 und Fig. 2 herkömmliche Abdichtungen des Lagerraums von Turboladern zum Raum im Rücken des Verdichterrades 1. Der Raum im Rücken des Verdichterrades erstreckt sich zwischen dem Verdichterrad 1 und einem angrenzenden, feststehenden Gehäuseteil, der Zwischenwand 3. In beiden Fällen wird das von rechts zwischen dem feststehenden Gehäuseteil 5 und den mit der Welle 2 mitrotierenden Teilen anspritzende Öl durch eine mit der Welle 2 mitrotierende Dichtscheibe 4 von der Dichtpartie abgeschirmt. Auf der linken Seite der Dichtscheibe wird durch die Dichtscheibe und das angrenzende, feststehende Gehäuseteil, der Zwischenwand 3, ein schmaler Spalt ausgebildet, welcher das Öl durch Drosselung sowie - bei Rotation - durch Rückförderung am Einströmen in den inneren Dichtungsbereich hindert. Die Abdichtung des Ölraums gegen ,Blow-by' wird in beiden Fällen mit Labyrinthen zwischen der Zwischenwand 3 und dem Verdichterrad 1 realisiert.

Die erfindungsgemässe Dichtung gemäss Fig. 3 ist demgegenüber um eine Fangkammer 51 erweitert, welche der rotierenden Dichtscheibe 4 vorgeschaltet ist. Die sich entlang dem Umfang erstreckende Fangkammer 51 besteht aus einer radial nach innen geöffneten Nut im stehenden Gehäuseteil 5, welche im unteren Bereich einen Ölablauf 54 besitzt. "Unterer Bereich" bezieht sich dabei auf die Schwerkraft, so dass sich das Öl im unteren Bereich der Fangkammer 51 ansammelt und entsprechend über den Ölablauf abgeführt wird. Die Fangkammer 51 führt über den Ölablauf einen grossen Teil des Ölstroms ab und reduziert so die Ölmenge, welche auf die Dichtscheibe 4 und den restlichen Teil der Dichtung auftrifft, wodurch insgesamt die Dichtheit verbessert wird.

Anschliessend an die Fangkammer besitzt die erfindungsgemässe Dichtung eine Art Labyrinth. Das Labyrinth umfasst gemäss Fig. 3 mindestens ein Vorsprung 42 an der Dichtscheibe 4, welcher in einer gegenüberliegenden Nut 53 im feststehenden Gehäuseteil 5 verläuft. Dieses Labyrinth soll das Öl am Entlangströmen der Dichtscheibe 4 hindern. Es können auch mehrere Vorsprünge vorgesehen sein, welche in einer oder mehreren Vertiefung verlaufen. Die Vorsprünge können auch auf der Gehäuseseite angeordnet sein und in entsprechenden Vertiefungen in der Dichtscheibe verlaufen.

Schliesslich verfügt das erfindungsgemässe Dichtsystem über eine radial nach aussen geöffnete Fangrinne 52 im feststehenden Gehäuseteil 5, über welche abgespritztes Öl abgeführt wird, so dass es nicht ein weiteres Mal auf die rotierende Welle auftrifft. Das in der Fangrinne 52 angesammelte Öl läuft wiederum im unteren Bereich in den Ölablauf 54.

Optional können im Bereich um die Fangkammer weitere Vorsprünge 41 vorgesehen sein. Auch kann in die Welle, bzw. in einem mit der Welle rotierenden Wellenaufsatz 6, ein Graben 61 eingelassen sein, welcher die Wirksamkeit der Fangkammer verstärkt.

Optional umfasst die erfindungsgemässe Abdichtung des Lagerraums von Turboladern zum Verdichterrad-Rückraum ein Labyrinth zur Abdichtung gegen Blow-by. Dieses Labyrinth kann zwischen der Dichtscheibe 4 und der Zwischenwand 3 angeordnet sein. Die Verschiebung des Labyrinths weg vom Verdichterrad 1 verringert den Wärmeeintrag in das Verdichterrad. Zudem gewinnt die Dichtung aufgrund der günstigeren Materialpaarung an Streiftoleranz.

Optional kann die Dichtung durch ein weiteres Labyrinth oder eine andere Dichtung zwischen dem Verdichterrad und den stehenden Gehäuseteilen, beispielsweise der Zwischenwand, ergänzt werden, um die Wirksamkeit der Abdichtung weiter zu erhöhen.

### Bezugszeichenliste

- 1: Verdichterrad
- 2: Welle
- 3: Zwischenwand
- 31: Labyrinth zwischen Zwischenwand und Dichtscheibe
- 4: Dichtscheibe
- 41, 42: Vorsprung an Dichtscheibe
- 5: Lagergehäuse
- 51: Fangkammer
- 52: Fangrinne
- 53: Vertiefung
- 54: Ölablauf
- 6: Wellenaufsatz
- 61: Graben in Wellenaufsatz

## Patentansprüche

1. Abdichtung des Raums im Rücken eines Verdichterrades (1) gegenüber mit Öl beaufschlagten Lagerraum in einem Lagergehäuse, in welchem Lagergehäuse eine Welle (2) drehbar gelagert ist, wobei die Abdichtung eine mit der Welle (2) verbundene Dichtscheibe (4) umfasst, **dadurch gekennzeichnet, dass** zwischen dem Lagerraum und der Dichtscheibe (4) in das Lagergehäuse (5) eine umlaufende, radial nach innen geöffnete Nut eingelassen ist, welche zusammen mit der Welle (2) eine Fangkammer (51) bildet.

2. Abdichtung nach Anspruch 1, wobei in die Welle, oder in einen mit der Welle rotierenden Aufsatz (6), ein die Fangkammer radial nach innen erweiternden Graben (61) eingelassen ist.

3. Abdichtung nach Anspruch 1 oder 2, wobei um unteren Bereich der Fangkammer (51) ein Ölablauf (54) vorgesehen ist.

4. Abdichtung nach Anspruch 1, wobei die Dichtscheibe (4) und das Lagergehäuse (5) sich gegenüberliegende Bereiche aufweisen und in diesen Bereichen mindestens ein Vorsprung (42) und mindestens eine Vertiefung (53) vorgesehen sind, wobei der Vorsprung (42) in der Vertiefung (53) verläuft und Vorsprung (42) und Vertiefung (53) ein Labyrinth bilden.

5. Abdichtung nach einem der Ansprüche 1 bis 4, wobei zwischen der Dichtscheibe (4) und dem Lagergehäuse (5) im Lagergehäuse (5) eine umlaufende, radial nach aussen geöffnete Fangrille (52) angeordnet ist.

6. Abdichtung nach Anspruch 5, wobei um unteren Bereich der Fangkammer (51) ein Ölablauf (54) vorgesehen ist und die Fangrille (52) im unteren Bereich ebenfalls in den Ölablauf (54) mündet.

7. Abdichtung nach einem der vorangehenden Ansprüche, wobei zwischen der Dichtscheibe (4) und dem zusammen mit dem Verdichterrad (1) den Raum im Rücken des Verdichterrades begrenzenden Gehäuseteil (3) eine Labyrinthdichtung (31) vorgesehen ist.

8. Abdichtung nach einem der vorangehenden Ansprüche, wobei zwischen dem Verdichterrad (1) und dem zusammen mit dem Verdichterrad (1) den Raum im Rücken des Verdichterrades begrenzenden Gehäuseteil (3) eine Labyrinthdichtung vorgesehen ist.

9. Abgasturbolader, mit einer Abdichtung des Verdichterrückraums gegenüber dem Ölraum nach einem der vorangehenden Ansprüche.

## Claims

1. Seal of the space in back of a compressor wheel (1) with respect to the oil-loaded bearing space in a bearing housing, in which bearing housing a shaft (2) is mounted rotatably, the seal comprising a sealing disc (4) connected to the shaft (2), **characterized in that**, between the bearing space and the sealing disc (4), a continuous, radially inwardly open groove is introduced into the bearing housing (5) and, together with the shaft (2), forms a catching chamber (51).

2. Seal according to Claim 1, in which a pit (61) radially inwardly widening the catching chamber is introduced into the shaft or into an attachment (6) rotating with the shaft.

3. Seal according to Claim 1 or 2, in which an oil run-off (54) is provided in the lower region of the catching chamber (51).

4. Seal according to Claim 1, in which the sealing disc (4) and the bearing housing (5) have mutually opposite regions, and at least one projection (42) and at least one depression (53) are provided in these regions, the projection (42) running in the depression (53), and the projection (42) and depression (53) forming a labyrinth.

5. Seal according to one of Claims 1 to 4, in which a continuous, radially outwardly open catching channel (52) is arranged between the sealing disc (4) and the bearing housing (5) in the bearing housing (5).

6. Seal according to Claim 5, in which an oil run-off (54) is provided in the lower region of the catching chamber (51), and the catching channel (52) likewise issues into the oil run-off (54) in the lower region.

7. Seal according to one of the preceding claims, in which a labyrinth seal (31) is provided between the sealing disc (4) and the housing part (3) which, together with the compressor wheel (1), delimits the space in back of the compressor wheel.

8. Seal according to one of the preceding claims, in which a labyrinth seal is provided between the compressor wheel (1) and the housing part (3) which, together with the compressor wheel (1), delimits the space in back of the compressor wheel.

9. Exhaust-gas turbocharger, having a seal of the compressor backspace with respect to the oil space according to one of the preceding claims.

## Revendications

1. Système d'étanchéité de l'espace à l'arrière d'une roue de compresseur (1) vis-à-vis d'un espace de palier sollicité avec de l'huile dans un boîtier de palier, dans lequel boîtier de palier est monté à rotation un arbre (2), le système d'étanchéité comprenant une rondelle d'étanchéité (4) connectée à l'arbre (2), **caractérisé en ce qu'**entre l'espace de palier et la rondelle d'étanchéité (4) dans le boîtier de palier (5) est pratiquée une rainure circonférentielle ouverte radialement vers l'intérieur qui forme conjointement avec l'arbre (2) une chambre de collecte (51).

2. Système d'étanchéité selon la revendication 1, dans lequel, dans l'arbre, ou dans un chapeau d'arbre (6) tournant avec l'arbre, est pratiqué un sillon (61) élargissant radialement vers l'intérieur la chambre de collecte.

3. Système d'étanchéité selon la revendication 1 ou 2, dans lequel on prévoit dans la région inférieure de la chambre de collecte (51) un écoulement d'huile (54).

4. Système d'étanchéité selon la revendication 1, dans lequel la rondelle d'étanchéité (4) et le boîtier de palier (5) présentent des régions opposées et dans ces régions sont prévus au moins une saillie (42) et au moins un renfoncement (53), la saillie (42) s'étendant dans le renfoncement (53) et la saillie (42) et le renfoncement (53) formant un labyrinthe.

5. Système d'étanchéité selon l'une quelconque des revendications 1 à 4, dans lequel, entre la rondelle d'étanchéité (4) et le boîtier de palier (5) dans le boitier de palier (5) est disposée une gorge de collecte (52) circonférentielle ouverte radialement vers l'extérieur.

6. Système d'étanchéité selon la revendication 5, dans lequel, autour de la région inférieure de la chambre de collecte (51), est prévu un écoulement d'huile (54) et la gorge de collecte (52) débouche dans la région inférieure également dans l'écoulement d'huile (54).

7. Système d'étanchéité selon l'une quelconque des revendications précédentes, dans lequel, entre la rondelle d'étanchéité (4) et la partie de boîtier (3) limitant conjointement avec la roue de compresseur (1) l'espace à l'arrière de la roue de compresseur, est prévu un joint à labyrinthe (31).

8. Système d'étanchéité selon l'une quelconque des revendications précédentes, dans lequel, entre la roue de compresseur (1) et la partie de boîtier (3) limitant conjointement avec la roue de compresseur (1) l'espace à l'arrière de la roue de compresseur, est prévu un joint à labyrinthe.

9. Turbosoufflante à gaz d'échappement, comprenant un système d'étanchéité de l'espace à l'arrière du compresseur vis-à-vis de l'espace d'huile selon l'une quelconque des revendications précédentes.
